# EUROPEAN PATENT APPLICATION

(11) **EP 4 782 674 A2**
(43) Date of publication of application: **29.07.2026**
(21) Application number: 26154197.3
(22) Date of filing: 26.01.2026
(51) Int. Cl.: F02C 9/54, F02C 9/20, F04D 29/56

(54) **PROPULSION SYSTEM WITH ADJUSTABLE CORE INLET GUIDE VANE**

(30) Priority: 26.01.2025 US 202519037271
(71) Applicant: RTX Corporation, Farmington, CT 06032 (US)
(72) Inventor: MORTON, Jeffrey T., Manchester (US); FEULNER, Matthew R., East Hampton (US); SAWYERS-ABBOTT, Nigel D., South Glastonbury (US)
(74) Representative: Dehns

(57) **Abstract**

An aircraft assembly includes an open propulsor rotor (60) and a turbine engine (56) configured to drive rotation of the open propulsor rotor about an axis. The turbine engine includes a flowpath (96), a compressor section (91), a combustor section (92), a turbine section (93), an inlet vane structure (128) and an inlet vane actuation system (138). The flowpath extends longitudinally through the compressor section, the combustor section and the turbine section from a flowpath inlet (98) into the turbine engine to a flowpath exhaust (100) from the turbine engine. The inlet vane structure is located at the flowpath inlet. The inlet vane structure includes a plurality of inlet guide vanes (134) arranged in an annular array. Each of the inlet guide vanes extend across the flowpath. The inlet guide vanes include a first inlet guide vane. The inlet vane actuation system is configured to change at least a parameter of the first inlet guide vane.

## Description

### BACKGROUND OF THE DISCLOSURE

### 1. Technical Field

This disclosure relates generally to an aircraft propulsion system and, more particularly, to an adjustable vane structure for the aircraft propulsion system.

### 2. Background Information

A propulsion system for an aircraft may include various adjustable vane structures for conditioning gas flowing within the propulsion system. Various types and configurations of adjustable vane structures are known in the art. While these known adjustable vane structures have various benefits, there is still room in the art for improvement.

### SUMMARY OF THE DISCLOSURE

According to an aspect of the present disclosure, an assembly is provided for an aircraft. This aircraft assembly includes an open propulsor rotor and a turbine engine configured to drive rotation of the open propulsor rotor about an axis. The turbine engine includes a flowpath, a compressor section, a combustor section, a turbine section, an inlet vane structure and an inlet vane actuation system. The flowpath extends longitudinally through the compressor section, the combustor section and the turbine section from a flowpath inlet into the turbine engine to a flowpath exhaust from the turbine engine. The inlet vane structure is located at the flowpath inlet. The inlet vane structure includes a plurality of inlet guide vanes arranged in an annular array. Each of the inlet guide vanes extend across the flowpath. The inlet guide vanes include a first inlet guide vane. The inlet vane actuation system is configured to change at least a parameter of the first inlet guide vane.

According to another aspect of the present disclosure, another assembly is provided for an aircraft. This aircraft assembly includes a compressor section, a combustor section, a turbine section, a flowpath, a first stator vane structure and a second stator vane structure. The flowpath extends longitudinally through the compressor section, the combustor section and the turbine section from a flowpath inlet to a flowpath exhaust. The first stator vane structure includes a plurality of first stator vanes arranged in an annular array. Each of the first stator vanes extends across the flowpath. The first stator vanes includes a first stator vane with an adjustable first stator vane pitch and/or an adjustable first stator vane camber. The second stator vane structure is arranged longitudinally along the flowpath between the first stator vane structure and an upstream-most stage of compressor blades in the compressor section. The second stator vane structure includes a plurality of second stator vanes arranged in an annular array. Each of the second stator vanes extends across the flowpath.

According to still another aspect of the present disclosure, another assembly is provided for an aircraft. This aircraft assembly includes a compressor section, a combustor section, a turbine section, a flowpath, an inlet vane structure and an inlet vane actuation system. The flowpath extends longitudinally through the compressor section, the combustor section and the turbine section from a flowpath inlet to a flowpath exhaust. The inlet vane structure includes a plurality of inlet guide vanes arranged in an annular array. Each of the inlet guide vanes extends across the flowpath. The inlet guide vanes include a first inlet guide vane spaced a distance from the flowpath inlet longitudinally along the flowpath. The first inlet guide vane has a vane dimension. The distance is equal to or less than five times the vane dimension. The inlet vane actuation system is configured to change at least a parameter of the first inlet guide vane.

The vane dimension may be a chord length of the first inlet guide vane.

The vane dimension may be a span height of the first inlet guide vane.

The assembly may also include an open propulsor rotor and a rotating structure operatively coupled to the open propulsor rotor. The rotating structure may include a bladed turbine rotor in the turbine section.

The second stator vanes may include a second stator vane with an adjustable second stator vane pitch and/or an adjustable second stator vane camber.

The first stator vane structure may be disposed at the flowpath inlet.

The assembly may also include an open propulsor rotor and a turbine engine configured to drive rotation of the open propulsor rotor about an axis. The turbine engine may include the compressor section, the combustor section, the turbine section, the first stator vane structure and the second stator vane structure.

The parameter may be a pitch of the first inlet guide vane.

The parameter may be a camber of the first inlet guide vane.

The inlet vane actuation system may be configured to: provide the parameter with a first value when the open propulsor rotor is operated in at least one forward thrust mode of operation; and provide the parameter with a second value when the open propulsor rotor is operated in at least one reverse thrust mode of operation.

The inlet vane actuation system may be configured to change the parameter for each of the inlet guide vanes.

The inlet vane structure may be configured to reduce swirl of a flow of air received into the flowpath at the flowpath inlet.

The first inlet guide vane may be spaced a distance from the flowpath inlet longitudinally along the flowpath. The first inlet guide vane may have a chord length. The distance may be equal to or less than the chord length.

The first inlet guide vane may be spaced a distance from the flowpath inlet longitudinally along the flowpath. The first inlet guide vane may have a span height. The distance may be equal to or less than three times the span height.

The turbine engine may also include a stator vane structure. The stator vane structure may include a plurality of stator vanes arranged in an annular array. Each of the stator vanes may extend across the flowpath. An uninterrupted section of the flowpath may extend in a downstream direction from the inlet vane structure to the stator vane structure.

The inlet vane structure may be a first inlet vane structure. The turbine engine may also include a second inlet vane structure arranged longitudinally along the flowpath downstream of the first inlet vane structure at an upstream end of the compressor section.

The inlet vane actuation system may be a first inlet vane actuation system. The turbine engine may also include a second inlet vane actuation system configured to change at least a parameter of a second inlet guide vane of the second inlet vane structure.

The assembly may include an open guide vane structure arranged axially next to the open propulsor rotor.

The flowpath inlet may be located axially along the axis between the open propulsor rotor and the open guide vane structure.

The assembly may also include an open guide vane actuation system and a controller. The open guide vane actuation system may be configured to change at least a parameter of a first open guide vane. The open guide vane structure may include a plurality of open guide vanes arranged in an annular array. The open guide vanes may include the first open guide vane. The controller may be configured to schedule operation of the inlet vane actuation system with operation of the open guide vane actuation system.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an aircraft with multiple propulsion systems mounted to wings of the aircraft.
FIG. 2 is a schematic illustration of the aircraft with its propulsion systems mounted to a fuselage of the aircraft.
FIG. 3 is a schematic illustration of an exemplary one of the propulsion systems.
FIG. 4 is a schematic illustration of a portion of the propulsion system of FIG. 3 at a propulsion section during forward thrust operation.
FIG. 5 is a schematic illustration of a portion of the propulsion system of FIG. 3 at a flowpath inlet.
FIG. 6 is a sectional illustration through the propulsion section along line 6-6 of FIG. 4.
FIG. 7 is a sectional illustration through the propulsion section along line 7-7 of FIG. 8.
FIG. 8 is a schematic illustration of a portion of the propulsion system of FIG. 3 at the propulsion section during reverse thrust operation.
FIG. 9 is a sectional illustration through the propulsion system along line 9-9 of FIG. 8.
FIG. 10 is a schematic illustration of a forward portion of an engine core.
FIG. 11 is a schematic illustration of a controller in signal communication with multiple actuation systems.
FIGS. 12A and 12B are sectional illustrations of an adjustable stator vane in various positions.
FIGS. 13A and 13B are sectional illustrations of another adjustable stator vane in various positions.
FIGS. 14A and 14B are front view illustrations of the aircraft depicting various symmetric propulsor rotating patterns.
FIG. 15 is a front view illustration of an aircraft depicting an asymmetric propulsor rotating pattern.

### DETAILED DESCRIPTION

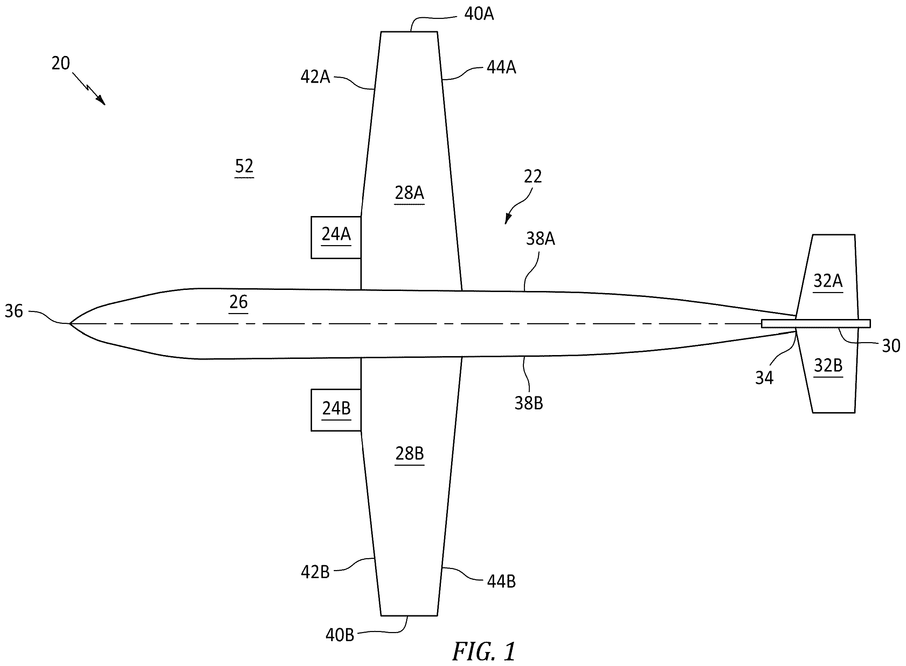

FIG. 1 is a schematic illustration of an aircraft 20. This aircraft 20 may be an airplane, a drone (e.g., an unmanned aerial vehicle (UAV)), or any other manned or unmanned aerial vehicle or system. The aircraft 20 includes an aircraft airframe 22 and one or more aircraft propulsion systems 24A and 24B (generally referred to as "24"); e.g., a pair of companion aircraft propulsion systems.

The aircraft airframe 22 of FIG. 1 includes an aircraft fuselage 26 and one or more aircraft wings 28A and 28B (generally referred to as "28"). This aircraft airframe 22 may also include one or more aircraft stabilizers, such as at least one vertical stabilizer 30 and one or more horizontal stabilizers 32A and 32B arranged at (e.g., on, adjacent or proximate) an aft, downstream tail end 34 of the aircraft fuselage 26. However, in other embodiments, it is contemplated one or more of the aircraft stabilizers 30, 32A and/or 32B may be omitted where, for example, the aircraft 20 is alternatively configured as a blended wing aircraft.

The aircraft fuselage 26 extends longitudinally along a longitudinal centerline of the aircraft airframe 22 and its aircraft fuselage 26 from a forward, upstream nose end 36 of the aircraft airframe 22 and its aircraft fuselage 26 to the fuselage tail end 34. The aircraft fuselage 26 extends laterally between and to opposing lateral sides 38A and 38B (generally referred to as "38") of the aircraft fuselage 26.

The aircraft wings 28A and 28B are arranged to the opposing lateral sides 38A and 38B of the aircraft fuselage 26. The first aircraft wing 28A of FIG. 1, for example, is connected to the aircraft fuselage 26 at the fuselage first side 38A. The second aircraft wing 28B is connected to the aircraft fuselage 26 at the fuselage second side 38B. The aircraft fuselage 26 of FIG. 1 is thereby located laterally between the first aircraft wing 28A and the second aircraft wing 28B. Each of these aircraft wings 28A and 28B projects spanwise out from the aircraft fuselage 26 to a tip 40A, 40B of the respective aircraft wing 28A, 28B. Each of the aircraft wings 28A and 28B extends longitudinally between and to a leading edge 42A, 42B of the respective aircraft wing 28A, 28B and a trailing edge 44A, 44B of the respective aircraft wing 28A, 28B.

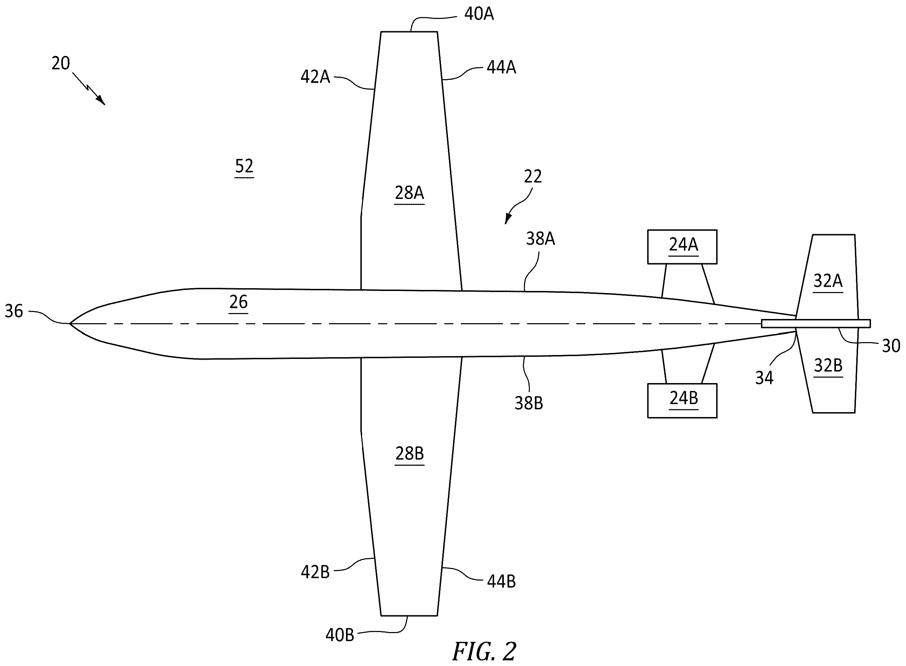

The aircraft propulsion systems 24A and 24B of FIG. 1 are arranged to the opposing lateral sides 38A and 38B of the aircraft fuselage 26. The first aircraft propulsion system 24A of FIG. 1, for example, is mounted to the first aircraft wing 28A. The second aircraft propulsion system 24B is mounted to the second aircraft wing 28B. The aircraft fuselage 26 of FIG. 1 is thereby located laterally between the first aircraft propulsion system 24A and the second aircraft propulsion system 24B. The present disclosure, however, is not limited to such an exemplary arrangement. For example, referring to FIG. 2, the first aircraft propulsion system 24A may alternatively be mounted to the aircraft fuselage 26 at the fuselage first side 38A. The second aircraft propulsion system 24B may alternatively be mounted to the aircraft fuselage 26 at the fuselage second side 38B.

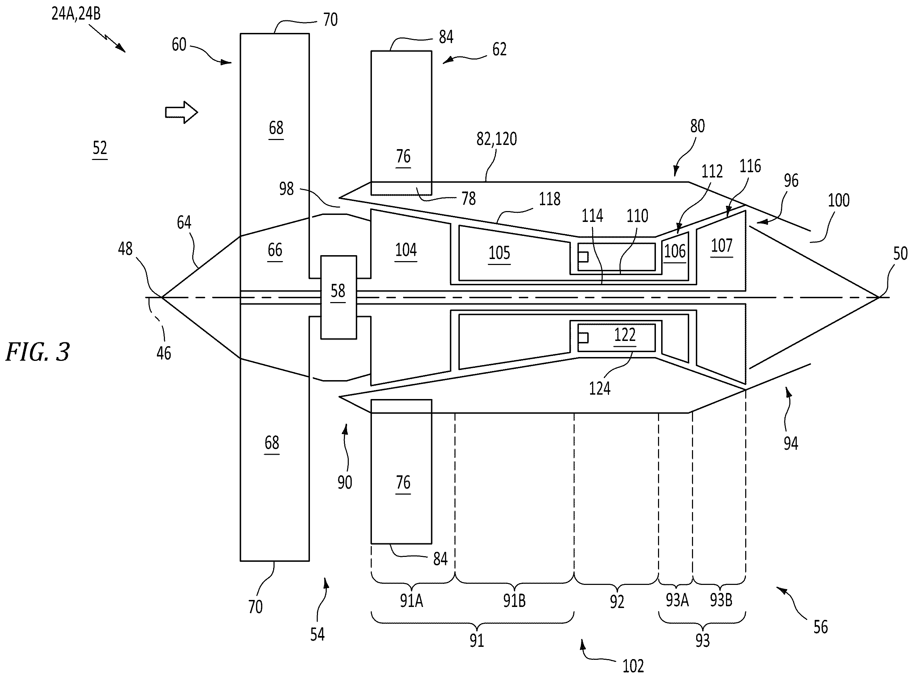

Referring to FIG. 3, each aircraft propulsion system 24 extends axially along an axis 46 between an upstream, forward end 48 of the aircraft propulsion system 24 and a downstream, aft end 50 of the aircraft propulsion system 24. The propulsion system axis 46 may be a centerline axis of the respective aircraft propulsion system 24 and/or a centerline axis of one or more members of the respective aircraft propulsion system 24. The propulsion system axis 46 may also or alternatively be a rotational axis of one or more members of the respective aircraft propulsion system 24.

Each aircraft propulsion system 24 may be configured as an open rotor propulsion system with a single open rotor and swirl recovery vane (SRV) architecture. Herein, the term "open" may describe a propulsion system section and/or a propulsion system component which is open to an environment 52 (e.g., an ambient environment) external to the aircraft propulsion system 24 and, more generally, the aircraft 20. The aircraft propulsion system 24 of FIG. 3, for example, includes an open rotor propulsion section 54, a gas turbine engine 56 and a geartrain 58.

The propulsion section 54 of FIG. 3 includes an open propulsor rotor 60 and an open guide vane structure 62. These propulsion section members 60 and 62 are un-ducted components of the aircraft propulsion system 24 and its propulsion section 54. The propulsion section 54 of FIG. 3 also includes a nose cone 64 disposed at (e.g., on, adjacent or proximate) the propulsion system forward end 48. Briefly, this nose cone 64 may be configured as a spinner which is rotatable with the propulsor rotor 60 about the propulsion system axis 46. Alternatively, the nose cone 64 may be configured as a stationary structure of the propulsion section 54.

The propulsor rotor 60 includes a rotor base 66 (e.g., a disk or a hub) and a plurality of open propulsor blades 68 (e.g., airfoils). The propulsor blades 68 are arranged and may be equispaced circumferentially about the rotor base 66 and the propulsion system axis 46 in an array (e.g., a circular array), which array of propulsor blades 68 may be unshrouded or alternatively shrouded by a tubular propulsor rotor shroud dedicated to the propulsor rotor for example. Each of the propulsor blades 68 is connected to (e.g., formed integral with or otherwise attached to) the rotor base 66. Each of the propulsor blades 68 projects spanwise along a span line of the respective propulsor blade 68 (e.g., radially relative to the propulsion system axis 46) out from an exterior surface of the rotor base 66, into the external environment 52, to a distal tip 70 of the respective propulsor blade 68. Each propulsor blade 68 is thereby configured as an un-ducted propulsor blade which is exposed to (e.g., disposed in) the surrounding external environment 52.

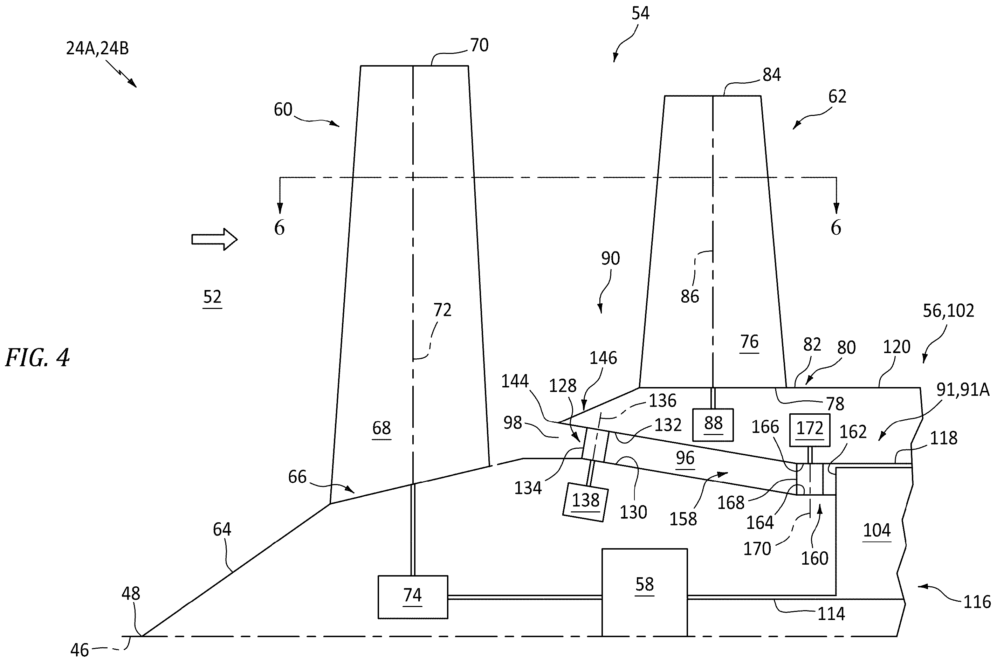

Referring to FIG. 4, each propulsor blade 68 may be configured to pivot about a respective blade pivot axis 72. This blade pivot axis 72 may generally extend radially relative to the propulsion system axis 46. Each propulsor blade 68 of FIG. 4 is operatively coupled with a blade actuation system 74. This blade actuation system 74 is configured to pivot each propulsor blade 68 about its respective blade pivot axis 72. By pivoting each propulsor blade 68 about its blade pivot axis 72, a pitch of the respective propulsor blade 68 may be changed. Of course, it is contemplated some or all of the propulsor blades 68 may be alternatively moved to change the propulsor blade pitch. Moreover, it is contemplated some or all of the propulsor blades 68 may alternatively be fixed pitch propulsor blades in other embodiments.

The guide vane structure 62 of FIG. 3 includes a plurality of open exit guide vanes 76 (e.g., airfoils) that are arranged and may be equispaced circumferentially about the propulsion system axis 46 in an array (e.g., a circular array), which array of guide vanes 76 may be unshrouded or alternatively shrouded by a tubular guide vane shroud dedicated to the guide vane structure 62 for example. The guide vane structure 62 and its guide vanes 76 are arranged axially next to (e.g., adjacent) the propulsor rotor 60 and its propulsor blades 68. The guide vane structure 62 and its guide vanes 76 of FIG. 3, for example, are arranged downstream of the propulsor rotor 60 and its propulsor blades 68, without (e.g., any) other elements axially therebetween to obstruct, turn and/or otherwise influence the air propelled by the propulsor rotor 60 to the guide vane structure 62 for example. Each of the guide vanes 76 of FIG. 3 is coupled to a support structure 78 of a stationary housing structure 80 for the aircraft propulsion system 24. This support structure 78 may be configured as or otherwise include a support frame, a case and/or another fixed structure of the housing structure 80. Each of the guide vanes 76 projects spanwise along a span line of the respective guide vane 76 (e.g., radially relative to the propulsion system axis 46) out from an exterior surface 82 of the housing structure 80, into the external environment 52, to a distal tip 84 of the respective guide vane 76. Here, the exterior surface 82 radially borders the external environment 52 and forms an exterior aerodynamic flow surface of the aircraft propulsion system 24. Each guide vane 76 is thereby configured as an un-ducted guide vane which is exposed to (e.g., disposed in) the surrounding external environment 52.

Referring to FIG. 4, each guide vane 76 may be configured to pivot about a respective vane pivot axis 86. This vane pivot axis 86 may generally extend radially relative to the propulsion system axis 46. Each guide vane 76 of FIG. 4 is operatively coupled with an open guide vane actuation system 88, which open guide vane actuation system 88 may be discrete from or integrated as a functional part of the blade actuation system 74. The open guide vane actuation system 88 is configured to pivot each guide vane 76 about its respective vane pivot axis 86. By pivoting each guide vane 76 about its vane pivot axis 86, a pitch of the respective guide vane 76 may be changed. Of course, it is contemplated some or all of the guide vanes 76 may be alternatively moved to change the guide vane pitch. Moreover, it is contemplated some or all of the guide vanes 76 may alternatively be fixed pitch guide vanes in other embodiments.

Referring to FIG. 3, the turbine engine 56 includes an inlet section 90, a compressor section 91, a combustor section 92, a turbine section 93 and an exhaust section 94. The compressor section 91 of FIG. 3 includes a low pressure compressor (LPC) section 91A and a high pressure compressor (HPC) section 91B. The turbine section 93 of FIG. 3 includes a high pressure turbine (HPT) section 93A and a low pressure turbine (LPT) section 93B. The turbine engine 56 also includes an (e.g., annular) engine flowpath 96 which extends longitudinally through the aircraft propulsion system 24 of FIG. 3 and its turbine engine 56 from an airflow inlet 98 into the engine flowpath 96 to a combustion products exhaust 100 from the engine flowpath 96. The flowpath inlet 98 is also an airflow inlet into the aircraft propulsion system 24 of FIG. 3 and its turbine engine 56. The flowpath exhaust 100 is also a combustion products exhaust from the aircraft propulsion system 24 of FIG. 3 and its turbine engine 56. At least (or only) the LPC section 91A, the HPC section 91B, the combustor section 92, the HPT section 93A and the LPT section 93B collectively form a core 102 (e.g., a gas generator) of the turbine engine 56.

Each of the engine sections 91A, 91B, 93A and 93B includes a respective bladed rotor 104-107; e.g., a ducted and/or shrouded engine rotor. Each of these engine rotors 104-107 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 96. Each of the rotor blades is connected to the respective rotor base. Each of the rotor blades projects radially (e.g., spanwise) out from the respective rotor base into the engine flowpath 96 and to a distal tip of the respective rotor blade.

The HPC rotor 105 is coupled to and rotatable with the HPT rotor 106. The HPC rotor 105 of FIG. 3, for example, is connected to the HPT rotor 106 by a high speed shaft 110. At least (or only) the HPC rotor 105, the HPT rotor 106 and the high speed shaft 110 collectively form a high speed rotating structure 112; e.g., a high speed spool of the turbine engine 56 and its engine core 102. This high speed rotating structure 112 of FIG. 3 and its members 105, 106 and 110 are rotatable about the propulsion system axis 46. However, in other embodiments, the high speed rotating structure 112 and its members 105, 106 and 110 may alternatively be rotatable about another rotational axis which is (e.g., radially and/or angularly) offset from the rotational axis of the propulsor rotor 60.

The LPC rotor 104 is coupled to and rotatable with the LPT rotor 107. The LPC rotor 104 of FIG. 3, for example, is connected to the LPT rotor 107 by a low speed shaft 114. At least (or only) the LPC rotor 104, the LPT rotor 107 and the low speed shaft 114 collectively form a low speed rotating structure 116; e.g., a low speed spool of the turbine engine 56 and its engine core 102. This low speed rotating structure 116 of FIG. 3 and its members 104, 107 and 114 are rotatable about the propulsion system axis 46. However, in other embodiments, the low speed rotating structure 116 and its members 104, 107 and 114 may alternatively be rotatable about another rotational axis which is (e.g., radially and/or angularly) offset from the rotational axis of the propulsor rotor 60.

The low speed rotating structure 116 is coupled to the propulsor rotor 60 through the geartrain 58. This geartrain 58 is disposed between and operatively couples the propulsor rotor 60 to the low speed rotating structure 116 and its LPT rotor 107. With this arrangement, the propulsor rotor 60 may rotate at a different (e.g., slower) rotational speed than the low speed rotating structure 116 and its LPT rotor 107. Depending on the specific configuration of the geartrain 58, the propulsor rotor 60 and the low speed rotating structure 116 may rotate in a common (the same) direction about the propulsion system axis 46 or in opposite directions about the propulsion system axis 46. While the aircraft propulsion system 24 is described above with a geared drivetrain operatively coupling the low speed rotating structure 116 to the propulsor rotor 60, the present disclosure is not limited to such an exemplary configuration. For example, the aircraft propulsion system 24 may alternatively include a direct-drive drivetrain operatively coupling the low speed rotating structure 116 to the propulsor rotor 60. With such an arrangement, the propulsor rotor 60 and the low speed rotating structure 116 and its LPT rotor 107 may rotate at a common rotational speed and in a common direction about the propulsion system axis 46.

The engine sections 90-94 of FIG. 3 are arranged sequentially along the propulsion system axis 46 and are housed within and/or formed by the housing structure 80. This housing structure 80 includes an engine case 118 (e.g., a gas generator case) and a nacelle 120. The engine case 118 houses one or more of the engine sections 91A-93B; e.g., the engine core 102. The engine case 118 of FIG. 3, for example, extends axially along (e.g., axially overlaps) and extends circumferentially about (e.g., circumscribes) the engine sections 91A-93B and the bladed rotors 104-107. The engine case 118 may also house the geartrain 58. The nacelle 120 houses and provides an aerodynamic cover over the engine case 118. An exterior wall of the nacelle 120 of FIG. 3, for example, is disposed radially outboard of, extends axially along (e.g., axially overlaps) and extends circumferentially about (e.g., circumscribes) the engine core 102 and its engine case 118. This nacelle wall may at least partially or completely form the exterior surface 82. With the foregoing arrangement, the bladed rotors 104-107 are disposed within the housing structure 80. By contrast, the propulsor rotor 60 and the guide vane structure 62 are disposed at least partially (or completely) outside of the housing structure 80.

During forward thrust operation of the aircraft propulsion system 24 of FIG. 3, ambient air within the external environment 52 is propelled by the rotating propulsor rotor 60 in the downstream, aft direction towards the propulsion system aft end 50. A major portion (e.g., more than 50%) of this air bypasses the turbine engine 56 to provide forward thrust while a minor portion (e.g., less than 50%) of the air flows into the turbine engine 56. For example, an outer stream of the air propelled by the rotating propulsor rotor 60 flows axially across the guide vane structure 62 and outside of the housing structure 80 and its exterior surface 82; e.g., along an exterior of the nacelle 120. The guide vane structure 62 conditions (e.g., straightens out, de-swirls, etc.) the outer stream of air within the external environment 52 to enhance the forward thrust. By contrast, an inner stream of the air propelled by the rotating propulsor rotor 60 may bypass the guide vane structure 62 and enter the turbine engine 56 and its engine flowpath 96 through the flowpath inlet 98. The air entering the engine flowpath 96 through the flowpath inlet 98 may be referred to as "core air".

The core air is compressed by the LPC rotor 104 and the HPC rotor 105 and directed into a combustion chamber 122 (e.g., an annular combustion chamber) of a combustor 124 (e.g., an annular combustor) in the combustor section 92. Fuel is injected into the combustion chamber 122 by one or more fuel injectors and mixed with the compressed core air to provide a fuel-air mixture. This fuel-air mixture is ignited and combustion products thereof flow through and sequentially drive rotation of the HPT rotor 106 and the LPT rotor 107. The rotation of the HPT rotor 106 and the LPT rotor 107 respectively drive rotation of the HPC rotor 105 and the LPC rotor 104 and, thus, compression of the core air. The rotation of the LPT rotor 107 also drives the rotation of the propulsor rotor 60 through the geartrain 58. The turbine engine 56 and its low speed rotating structure 116 thereby power operation of (e.g., drive rotation of) the propulsor rotor 60, for example through the geartrain 58 of FIG. 3, during aircraft propulsion system operation.

The turbine engine 56 of FIG. 4 includes a core inlet vane structure 128 (e.g., a stator vane structure) arranged longitudinally along the engine flowpath 96 in the inlet section 90. This core inlet vane structure 128 of FIG. 4 includes a radial inner platform 130, a radial outer platform 132 and a plurality of core inlet guide vanes 134; e.g., stator vanes. A radial outer side of the inner platform 130 forms a radial inner peripheral boundary of the engine flowpath 96 through the core inlet vane structure 128. A radial inner side of the outer platform 132 forms a radial outer peripheral boundary of the engine flowpath 96 through the core inlet vane structure 128. The core inlet guide vanes 134 are arranged and may (or may not) be equispaced circumferentially about the propulsion system axis 46 in an annular array; e.g., a circular array. Each of the core inlet guide vanes 134 extends spanwise along a span line of the respective core inlet guide vane 134 (e.g., generally radially relative to the propulsion system axis 46) across the engine flowpath 96 from the inner platform 130 to the outer platform 132.

Each core inlet guide vane 134 of FIG. 4 is configured to pivot about a respective core inlet guide vane pivot axis 136. This core inlet guide vane pivot axis 136 may extend generally radially relative to the propulsion system axis 46. Each core inlet guide vane 134 of FIG. 4 is operatively coupled with a core inlet guide vane actuation system 138, which core inlet guide vane actuation system 138 may be discrete from or integrated as a functional part of the blade actuation system 74 and/or the open guide vane actuation system 88. The core inlet guide vane actuation system 138 is configured to pivot each core inlet guide vane 134 about its respective core inlet guide vane pivot axis 136. By pivoting each core inlet guide vane 134 about its core inlet guide vane pivot axis 136, a pitch of the respective core inlet guide vane 134 may be changed. Of course, it is contemplated some or all of the core inlet guide vanes 134 may be alternatively moved to change the core inlet guide vane pitch. Moreover, it is contemplated a subset of one or more of the core inlet guide vanes 134 may alternatively be fixed pitch guide vanes in other embodiments.

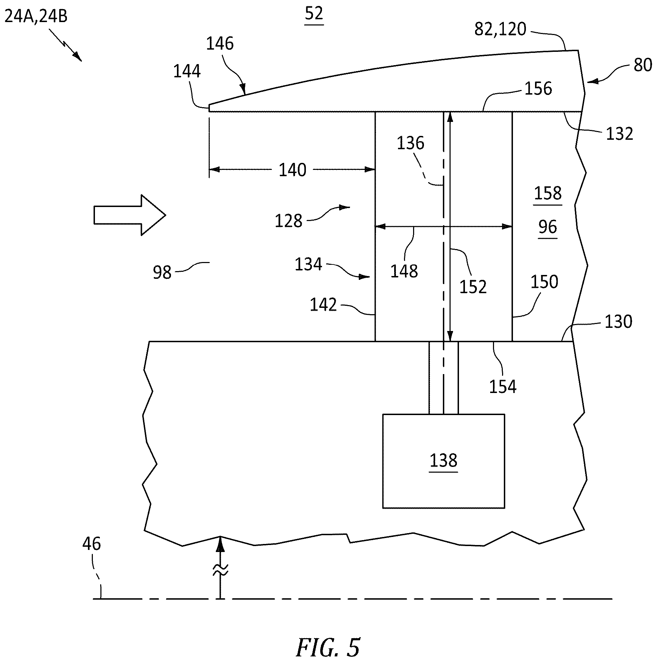

Referring to FIG. 5, the core inlet vane structure 128 is arranged at the flowpath inlet 98. The core inlet vane structure 128 may thereby be configured as an upstream-most stator vane structure longitudinally along the engine flowpath 96. Each core inlet guide vane 134 of FIG. 5 is longitudinally offset from the flowpath inlet 98 by an offset distance 140 longitudinally along the engine flowpath 96. More particularly, a leading edge 142 of each core inlet guide vane 134 is spaced from a leading edge 144 of a splitter structure 146 (e.g., an inlet splitter, an eagle beak structure, etc.) by the offset distance 140 longitudinally along the engine flowpath 96. Briefly, the splitter structure 146 is configured to split the air propelled by the propulsor rotor 60 (see FIG. 4) during the forward thrust operation into the inner stream of air and the outer stream of air. The leading edge 144 of the splitter structure 146 of FIG. 4 thereby forms a radial outer peripheral boundary of the flowpath inlet 98.

The offset distance 140 may be sized such that the core inlet vane structure 128 and its core inlet guide vanes 134 are (e.g., slightly) recessed longitudinally into the engine flowpath 96 from the flowpath inlet 98 and/or the leading edge 144 of the splitter structure 146. For example, the offset distance 140 may be equal to or less than five times (5x) a core inlet guide vane chord length 148. Here, the core inlet guide vane chord length 148 is measured as a length from the leading edge 142 of a respective core inlet guide vane 134 to a trailing edge 150 of the respective core inlet guide vane 134, for example at a mid-span location along the respective core inlet guide vane 134. The offset distance 140 may also or alternatively be equal to or less than three times (3x) a core inlet guide vane span height 152. Here, the core inlet guide vane span height 152 is measured as a height from a base end 154 of a respective core inlet guide vane 134 to a tip end 156 of the respective core inlet guide vane 134, for example at a mid-chord location along the respective core inlet guide vane 134.

Referring to FIG. 4, the core inlet vane structure 128 is configured to condition (e.g., de-swirl) the inner stream of air directed into the engine flowpath 96 through the flowpath inlet 98 during the forward thrust operation. The core inlet guide vane actuation system 138, for example, may adjust the pitch of the core inlet guide vanes 134 such that the core inlet vane structure 128 reduces or substantially eliminates circumferential swirl imparted into the inner stream of air by the rotating propulsor rotor 60. The core inlet vane structure 128 may thereby reduce flow distortions in the core air directed through an inlet duct section 158 of the engine flowpath 96 to the LPC section 91A. Here, the pitch of the core inlet guide vanes 134 may be adjusted based on various parameters including, but not limited to, the rotational speed of the propulsor rotor 60 and/or the pitch of the propulsor blades 68.

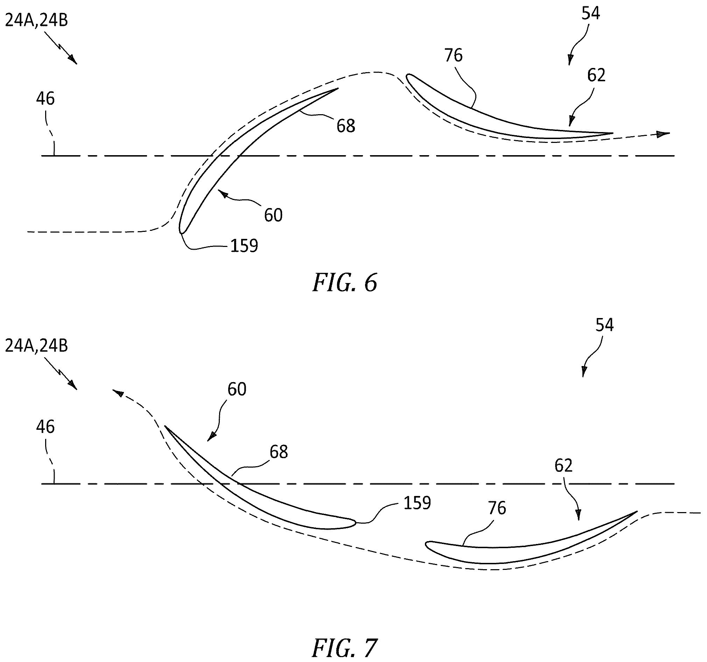

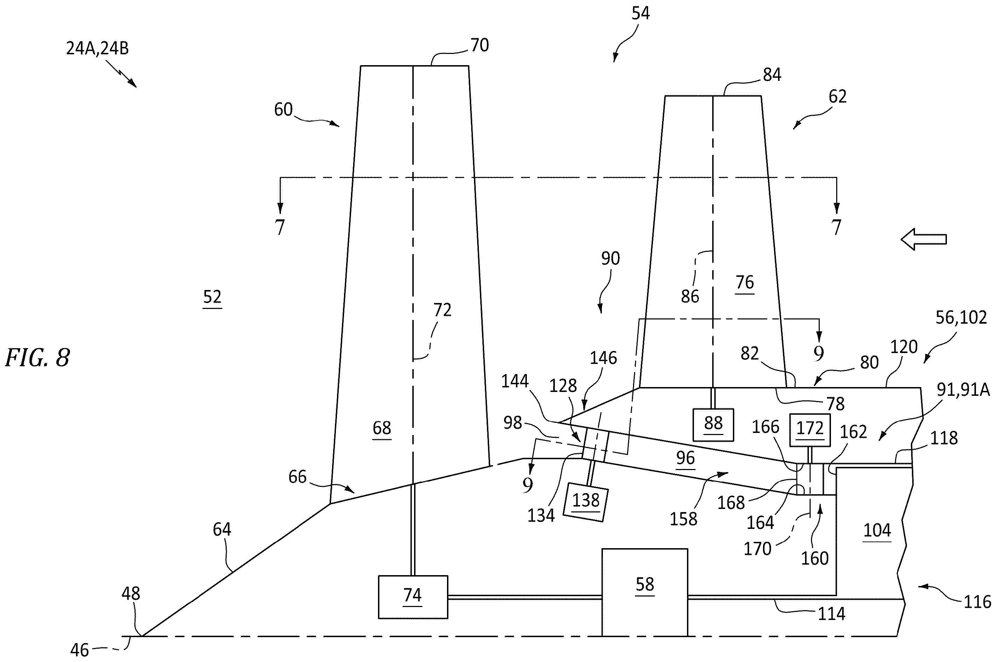

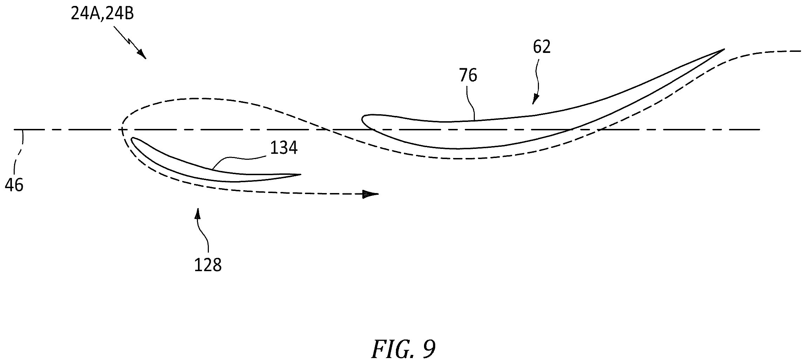

During most phases of aircraft travel (e.g., during taxiing, takeoff, climb, cruise and descent), referring to FIG. 6, the pitch of the propulsor blades 68 is selected to propel the ambient air in an aft direction to provide the forward aircraft thrust. However following touchdown during aircraft landing, referring to FIG. 7, the pitch of the propulsor blades 68 may be selected to propel the ambient air in a forward direction to provide the reverse aircraft thrust. The propulsor blade 68, for example, may be pivoted by the blade actuation system 74 (see FIG. 4) about one-hundred to one-hundred and forty degrees (100°-140°) from the pitch position of FIG. 6 to the pitch position of FIG. 7. This pivoting of each propulsor blade 68 may reverse an orientation of its mechanical leading edge 159. During such reverse thrust operation, referring to FIG. 8, the rotating propulsor rotor 60 pulls the ambient air across the guide vane structure 62 and its guide vanes 76 and directs an outer stream of that air in the axial forward direction. By contrast, an inner stream of the air turns around the leading edge 144 of the splitter structure 146 and enters the engine flowpath 96 through the flowpath inlet 98. Referring to FIG. 9, to reduce flow distortions in the incoming air received through the flowpath inlet 98, the core inlet guide vane actuation system 138 (see FIG. 4) adjusts the pitch of the core inlet guide vanes 134. Here, the pitch of the core inlet guide vanes 134 may be adjusted based on various parameters including, but not limited to, the pitch of the guide vanes 76. Here too, the pitch of the guide vanes 76 may be adjusted by the open guide vane actuation system 88 (see FIG. 4) to guide and condition the ambient air flow drawn across the guide vane structure 62 to the propulsor rotor 60 (see FIG. 7).

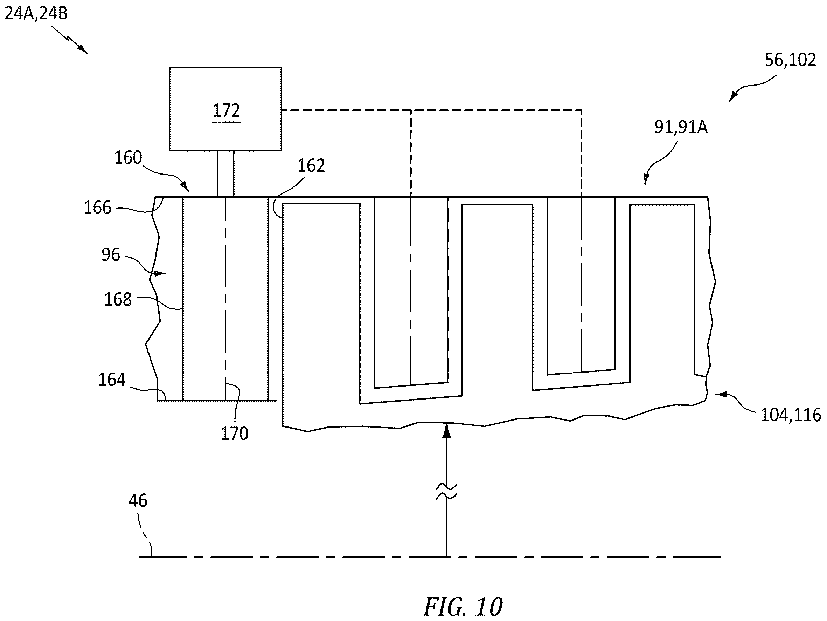

Referring to FIG. 4, the turbine engine 56 may also include a compressor inlet vane structure 160 (e.g., stator vane structure) arranged longitudinally along the engine flowpath 96 between the core inlet vane structure 128 and the LPC rotor 104. This compressor inlet vane structure 160 is disposed upstream of the LPC rotor 104 along the engine flowpath 96. The compressor inlet guide vane structure 160 of FIG. 4, for example, is disposed within the engine flowpath 96 longitudinally next to an upstream end 162 of the LPC rotor 104 and, more particularly, an upstream-most stage of compressor blades in the compressor section 91; see also FIG. 10. Here, the inlet duct section 158 of the engine flowpath 96 that projects longitudinally from the core inlet vane structure 128 to the compressor inlet vane structure 160 may be a circumferentially and longitudinally uninterrupted length of the engine flowpath 96. For example, the turbine engine 56 may be configured without any other vane structures or bladed rotors along the engine flowpath 96 in between the core inlet vane structure 128 and the compressor inlet vane structure 160. Of course, it is contemplated the turbine engine 56 may alternatively include a ducted fan in the position of the LPC rotor 104, and the LPC rotor 104 may be disposed further downstream along the engine flowpath 96.

Referring to FIG. 10, the compressor inlet vane structure 160 is configured to condition (e.g., pre-swirl) the core air directed into the LPC section 91A and/or change an effective flow area of the engine flowpath 96 into the LPC section 91A. The compressor inlet vane structure 160 of FIG. 10 includes a radial inner platform 164, a radial outer platform 166 and a plurality of compressor inlet guide vanes 168; e.g., stator vanes. A radial outer side of the inner platform 164 forms a radial inner peripheral boundary of the engine flowpath 96 through the compressor inlet vane structure 160. A radial inner side of the outer platform 166 forms a radial outer peripheral boundary of the engine flowpath 96 through the compressor inlet vane structure 160. The compressor inlet guide vanes 168 are arranged and may (or may not) be equispaced circumferentially about the propulsion system axis 46 in an annular array; e.g., a circular array. Each of the compressor inlet guide vanes 168 extends spanwise along a span line of the respective compressor inlet guide vane 168 (e.g., generally radially relative to the propulsion system axis 46) across the engine flowpath 96 from the inner platform 164 to the outer platform 166.

Each compressor inlet guide vane 168 of FIG. 10 is configured to pivot about a respective compressor inlet guide vane pivot axis 170. This compressor inlet guide vane pivot axis 170 may extend generally radially relative to the propulsion system axis 46. Each compressor inlet guide vane 168 of FIG. 10 is operatively coupled with a compressor inlet guide vane actuation system 172, which compressor inlet guide vane actuation system 172 may be discrete from or integrated as a functional part of one or more of the actuation systems 74, 88 and/or 138 of FIG. 4. The compressor inlet guide vane actuation system 172 is configured to pivot each compressor inlet guide vane 168 about its respective compressor inlet guide vane pivot axis 170. By pivoting each compressor inlet guide vane 168 about its compressor inlet guide vane pivot axis 170, a pitch of the respective compressor inlet guide vane 168 may be changed. Of course, it is contemplated some or all of the compressor inlet guide vanes 168 may be alternatively moved to change the compressor inlet guide vane pitch. Moreover, it is contemplated a subset of one or more of the compressor inlet guide vanes 168 may alternatively be fixed pitch guide vanes in other embodiments.

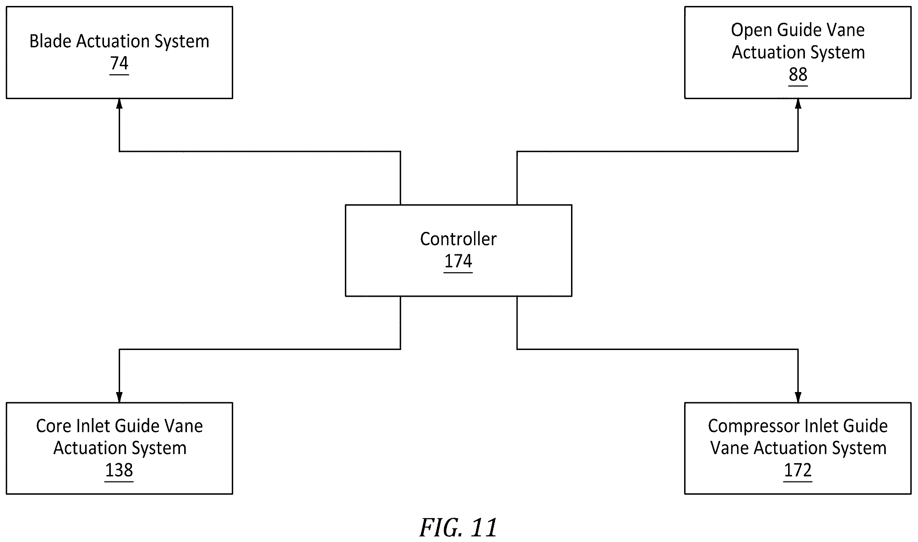

Referring to FIG. 11, an onboard electronic controller 174 may be provided to control operation of one or more of the actuation systems 74, 88, 138 and/or 172; see also FIGS. 4 and 10. This electronic controller 174 may be configured to schedule operation of the various actuation systems 74, 88, 138 and/or 172 such that adjustments to the pitches and/or other parameters of the airfoils (e.g., 68, 76, 134 and/or 168 of FIG. 4) are timed to compliment one another. For example, the pitches of the airfoils (e.g., 68, 76, 134 and/or 168 of FIG. 4) may be scheduled to change contemporaneously (e.g., simultaneously, overlapping, etc.), one-after-the-other or otherwise to reduce disturbances to airflow along an exterior of the respective aircraft propulsion system 24 (see FIG. 3) and/or into the engine flowpath 96 (see FIG. 4). Examples of the electronic controller 174 include, but are not limited to, an electronic engine controller (EEC), an electronic control unit (ECU), or a full-authority digital engine controller (FADEC).

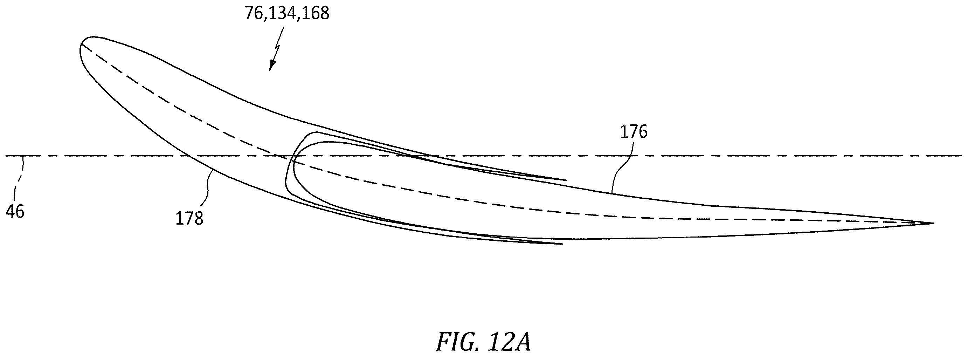

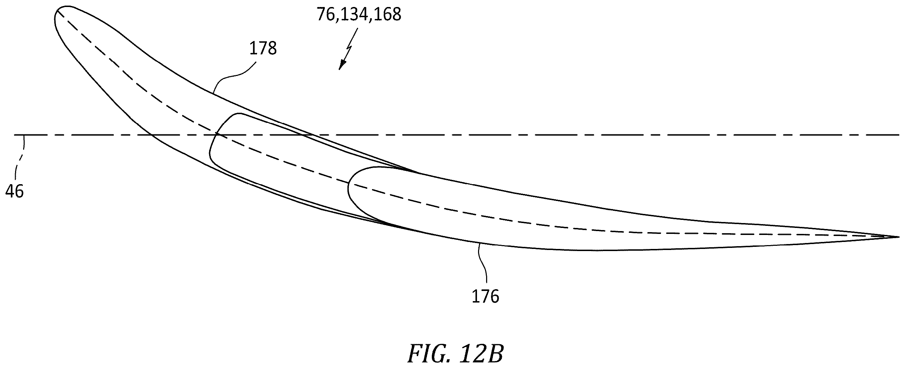

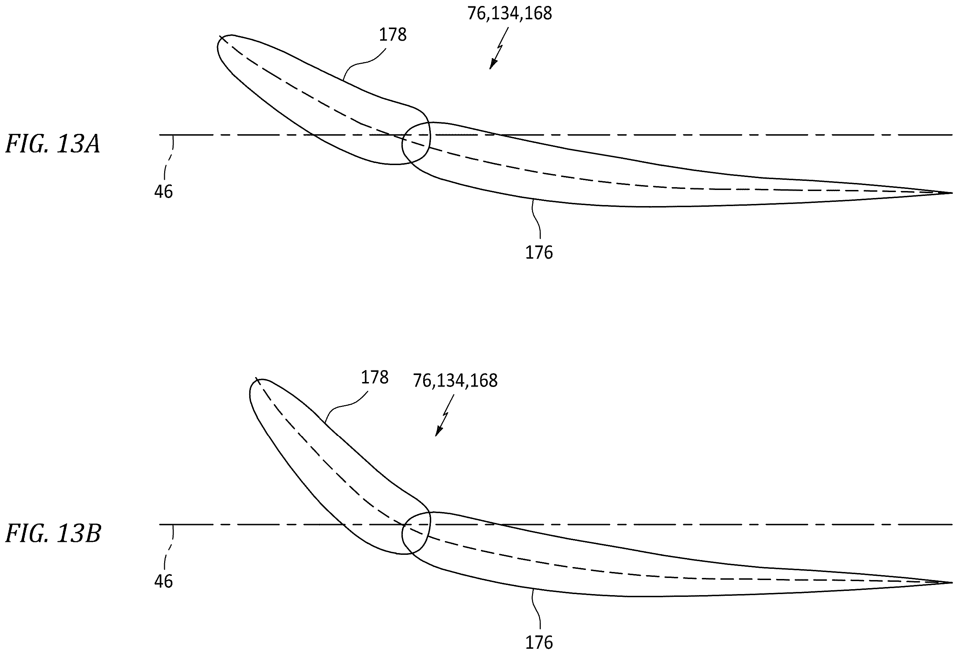

In some embodiments, referring to FIGS. 4 and 10, one or more of the stator vanes (e.g., 76, 134 and/or 168) may each be configured to pivot about a respective pivot axis (e.g., 86, 136 and/or 170) to change a vane parameter such as the pitch of the respective stator vane (e.g., 76, 134 and/or 168). The present disclosure, however, is not limited to such an exemplary actuation technique. For example, referring to FIGS. 12A-13B, it is contemplated any one or more or all of the stator vanes (e.g., 76, 134 and/or 168) may alternatively include a fixed trailing edge section 176 and an adjustable leading edge section 178. The trailing edge section 176 may be fixed to another stationary structure of the turbine engine 56 (see FIG. 3). The leading edge section 178 may be configured to move relative to the trailing edge section 176 to operationally adjust a vane parameter such as the pitch of the respective stator vane (e.g., 76, 134 and/or 168). This relative movement between the leading edge section 178 and the trailing edge section 176 may also be operable to adjust other stator vane parameters such as, for example, a camber of the respective stator vane (e.g., 76, 134 and/or 168). In some embodiments, referring to FIGS. 12A and 12B, the leading edge section 178 may be configured to translate (e.g., along a mean line of the respective stator vane) relative to the trailing edge section 176. In other embodiments, referring to FIGS. 13A and 13B, the leading edge section 178 may be configured to pivot relative to the trailing edge section 176. With these arrangements, the camber of the stator vane (e.g., 76, 134 and/or 168) may also or alternatively be tailored in a similar manner as described above with respect to the vane pitch.

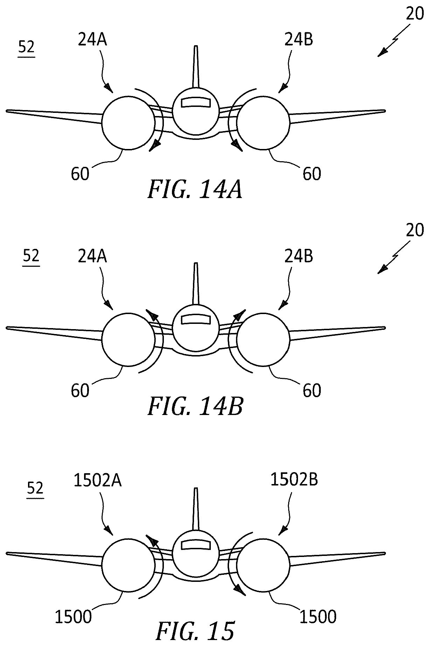

In some embodiments, referring to FIG. 3, the first aircraft propulsion system 24A is configured such that its propulsor rotor 60 rotates in a first rotational direction (e.g., clockwise or counterclockwise) about the respective propulsion system axis 46. By contrast, the second aircraft propulsion system 24B is configured such that its propulsor rotor 60 rotates in a second rotational direction (e.g., counterclockwise or clockwise) about the respective propulsion system axis 46, which second rotational direction is rotationally opposite the first rotational direction. Referring to FIGS. 14A and 14B, the propulsor rotor 60 of the first aircraft propulsion system 24A and the propulsor rotor 60 of the second aircraft propulsion system 24B thereby rotate in different rotational directions during aircraft flight. In FIG. 14A, the propulsor rotors 60 of the aircraft propulsion systems 24A and 24B rotate in an inboard down-down symmetric rotating pattern. In FIG. 14B, the propulsor rotors 60 of the aircraft propulsion systems 24A and 24B rotate in an inboard up-up symmetric rotating pattern. Such symmetric rotating patterns may facilitate a reduction in propulsion system noise, an increase in propulsion system performance, provision of symmetric control surface geometries, etc. By contrast, FIG. 15 illustrates propulsor rotors 1500 of right and left side aircraft propulsion systems 1502A and 1502B rotating in an asymmetric rotating pattern.

In some embodiments, referring to FIG. 3, the aircraft propulsion systems 24A and 24B may be configured with different (e.g., uniquely configured, opposite rotation, etc.) turbine engines 56 to facilitate the symmetric rotating pattern of FIG. 14A or 14B in the aircraft propulsion systems 24A and 24B. For example, where each geartrain 58 is configured such that the rotating components 60 and 116 coupled therewith rotate in a common rotational direction, (a) the low speed rotating structure 116 of the first aircraft propulsion system 24A may be configured to rotate in the first rotational direction and (b) the low speed rotating structure 116 of the second aircraft propulsion system 24B may be configured to rotate in the second rotational direction. In another example, where each geartrain 58 is configured such that the rotating components 60 and 116 coupled therewith rotate in opposite rotational directions, (a) the low speed rotating structure 116 of the first aircraft propulsion system 24A may be configured to rotate in the second rotational direction and (b) the low speed rotating structure 116 of the second aircraft propulsion system 24B may be configured to rotate in the first rotational direction. While such embodiments have various benefits, these embodiments may also lead to duplication of research and development efforts for the two different turbine engines 56 and engine cores 102. Moreover, to maintain a supply of spare parts, two separate supplies of spare parts may need to be maintained, one for each turbine engine / engine core configuration.

In other embodiments, the aircraft propulsion systems 24A and 24B may be configured with different (e.g., uniquely configured) drivetrains operatively coupling the turbine engines 56 to the propulsor rotors 60. For example, the geartrain 58 of the first aircraft propulsion systems 24A may be configured as a counter-rotating geartrain; e.g., a geartrain configured as or otherwise including an epicyclic star gear system. The low speed rotating structure 116 of the first aircraft propulsion system 24A may thereby be configured to rotate in the second rotational direction to facilitate rotation of the associated propulsor rotor 60 in the first rotational direction. By contrast, the geartrain 58 of the second aircraft propulsion systems 24B may be configured as a co-rotating geartrain; e.g., a geartrain configured as or otherwise including an epicyclic planetary gear system. The low speed rotating structure 116 of the second aircraft propulsion system 24B may thereby be configured to rotate in the second rotational direction to facilitate rotation of the associated propulsor rotor 60 in the second rotational direction. In another example, the geartrain 58 of the first aircraft propulsion systems 24A may be configured as a co-rotating geartrain. The low speed rotating structure 116 of the first aircraft propulsion system 24A may thereby be configured to rotate in the first rotational direction to facilitate rotation of the associated propulsor rotor 60 in the first rotational direction. By contrast, the geartrain 58 of the second aircraft propulsion systems 24B may be configured as a counter-rotating geartrain. The low speed rotating structure 116 of the second aircraft propulsion system 24B may thereby be configured to rotate in the first rotational direction to facilitate rotation of the associated propulsor rotor 60 in the second rotational direction. With such embodiments, the aircraft propulsion systems 24A and 24B may share a common turbine engine configuration, a common engine core configuration, or at least one or more common internal core components and/or structures; e.g., the rotating structure(s) 112, 116, the inlet duct section 158 of the engine flowpath 96 (see FIG. 4), the combustor 124, etc. Herein, the term "common" may describe elements which are identical and may share a single manufacturer / supplier part number. Spare parts for the first and second aircraft propulsion systems 24A and 24B may thereby be significantly reduced because a single replacement turbine engine 56, a single replacement engine core 102 and/or a single set of parts may be used with either the first aircraft propulsion system 24A or the second aircraft propulsion system 24B. Of course, various other techniques may be used in conjunction with or in alternative to provision of the different drivetrains to configure the aircraft propulsion systems 24A and 24B with various common components while still facilitating the symmetric rotating pattern of FIG. 14A or 14B.

The guide vane structure 62 is described above as a fixed (e.g., non-rotatable) guide vane structure. It is contemplated, however, the guide vane structure 62 may alternatively be selectively rotatable about the respective propulsion system axis 46. With such an arrangement, each aircraft propulsion system 24 may be configured as an open rotor propulsion system with a swirl recovery blade (SRB) open rotor architecture. More particularly, each aircraft propulsion system 24 may operate as: (A) a counter-rotating open rotor (CROR) propulsion system during a dual rotor mode of operation (e.g., when both the propulsor rotor 60 and the structure 62 are counter-rotating about the respective propulsion system axis 46); and (B) a single open rotor and swirl recovery vane (SRV) propulsion system during a single rotor mode of operation (e.g., when the propulsor rotor 60 is rotating and the structure 62 is rotationally fixed about the respective propulsion system axis 46). Note, when the guide vane structure 62 is configured to selectively rotate about the respective propulsion system axis 46, the moving guide vanes 76 operate as propulsor blades.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft, comprising:
an open propulsor rotor; and
a turbine engine configured to drive rotation of the open propulsor rotor about an axis, the turbine engine including a flowpath, a compressor section, a combustor section, a turbine section, an inlet vane structure and an inlet vane actuation system;
the flowpath extending longitudinally through the compressor section, the combustor section and the turbine section from a flowpath inlet into the turbine engine to a flowpath exhaust from the turbine engine;
the inlet vane structure located at the flowpath inlet, the inlet vane structure comprising a plurality of inlet guide vanes arranged in an annular array, each of the plurality of inlet guide vanes extending across the flowpath, and the plurality of inlet guide vanes comprising a first inlet guide vane; and
the inlet vane actuation system configured to change at least a parameter of the first inlet guide vane.

2. The assembly of claim 1, wherein the parameter is a pitch of the first inlet guide vane.

3. The assembly of claim 1 or 2, wherein the parameter is a camber of the first inlet guide vane.

4. The assembly of claim 1, 2 or 3, wherein the inlet vane actuation system is configured to
provide the parameter with a first value when the open propulsor rotor is operated in at least one forward thrust mode of operation; and
provide the parameter with a second value when the open propulsor rotor is operated in at least one reverse thrust mode of operation.

5. The assembly of any preceding claim, wherein the inlet vane actuation system is configured to change the parameter for each of the plurality of inlet guide vanes.

6. The assembly of any preceding claim, wherein the inlet vane structure is configured to reduce swirl of a flow of air received into the flowpath at the flowpath inlet.

7. The assembly of any preceding claim, wherein
the first inlet guide vane is spaced a distance from the flowpath inlet longitudinally along the flowpath;
the first inlet guide vane has a chord length; and
the distance is equal to or less than five times the chord length, and / or
wherein
the first inlet guide vane is spaced a distance from the flowpath inlet longitudinally along the flowpath;
the first inlet guide vane has a span height; and
the distance is equal to or less than three times the span height.

8. The assembly of any preceding claim, wherein
the turbine engine further includes a stator vane structure, the stator vane structure comprises a plurality of stator vanes arranged in an annular array, and each of the plurality of stator vanes extends across the flowpath; and
an uninterrupted section of the flowpath extends in a downstream direction from the inlet vane structure to the stator vane structure.

9. The assembly of any preceding claim, wherein the inlet vane structure is a first inlet vane structure, and the turbine engine further includes a second inlet vane structure arranged longitudinally along the flowpath downstream of the first inlet vane structure at an upstream end of the compressor section,
wherein optionally, the inlet vane actuation system is a first inlet vane actuation system, and the turbine engine further includes a second inlet vane actuation system configured to change at least a parameter of a second inlet guide vane of the second inlet vane structure.

10. The assembly of any preceding claim, further comprising an open guide vane structure arranged axially next to the open propulsor rotor, wherein optionally, the flowpath inlet is located axially along the axis between the open propulsor rotor and the open guide vane structure.

11. The assembly of claim 10, further comprising:
an open guide vane actuation system configured to change at least a parameter of a first open guide vane, the open guide vane structure comprising a plurality of open guide vanes arranged in an annular array, and the plurality of open guide vanes comprise the first open guide vane; and
a controller configured to schedule operation of the inlet vane actuation system with operation of the open guide vane actuation system.

12. An assembly for an aircraft, comprising:
a compressor section;
a combustor section;
a turbine section;
a flowpath extending longitudinally through the compressor section, the combustor section and the turbine section from a flowpath inlet to a flowpath exhaust;
a first stator vane structure comprising a plurality of first stator vanes arranged in an annular array, each of the plurality of first stator vanes extending across the flowpath, and the plurality of first stator vanes comprising a first stator vane with at least one of an adjustable first stator vane pitch or an adjustable first stator vane camber; and
a second stator vane structure arranged longitudinally along the flowpath between the first stator vane structure and an upstream-most stage of compressor blades in the compressor section, the second stator vane structure comprising a plurality of second stator vanes arranged in an annular array, and each of the plurality of second stator vanes extending across the flowpath.

13. The assembly of claim 12, wherein the plurality of second stator vanes comprising a second stator vane with at least one of an adjustable second stator vane pitch or an adjustable second stator vane camber, and / or
wherein the first stator vane structure is disposed at the flowpath inlet, and / or further comprising:
an open propulsor rotor; and
a turbine engine configured to drive rotation of the open propulsor rotor about an axis, the turbine engine comprising the compressor section, the combustor section, the turbine section, the first stator vane structure and the second stator vane structure.

14. An assembly for an aircraft, comprising:
a compressor section;
a combustor section;
a turbine section;
a flowpath extending longitudinally through the compressor section, the combustor section and the turbine section from a flowpath inlet to a flowpath exhaust;
an inlet vane structure comprising a plurality of inlet guide vanes arranged in an annular array, each of the plurality of inlet guide vanes extending across the flowpath, the plurality of inlet guide vanes comprising a first inlet guide vane spaced a distance from the flowpath inlet longitudinally along the flowpath, the first inlet guide vane having a vane dimension, and the distance equal to or less than five times the vane dimension; and
an inlet vane actuation system configured to change at least a parameter of the first inlet guide vane.

15. The assembly of claim 14, further comprising:
an open propulsor rotor; and
a rotating structure operatively coupled to the open propulsor rotor, the rotating structure comprising a bladed turbine rotor in the turbine section.
